# EUROPÄISCHE PATENTSCHRIFT

(11) **EP 1 668 940 B1**
(45) Veröffentlichungstag und Bekanntmachung des Hinweises auf die Patenterteilung: **28.11.2007**
(21) Anmeldenummer: 04787266.8
(22) Anmeldetag: 30.09.2004
(51) Int. Cl.: H04Q 7/34

(54) **REKONFIGURIERBARES FUNKSYSTEM MIT FEHLERFALLERKENNUNG UND -BEHANDLUNG**
RECONFIGURABLE RADIO SYSTEM WITH ERROR RECOGNITION AND TREATMENT
SYSTEME RADIO RECONFIGURABLE AVEC RECONNAISSANCE ET TRAITEMENT D'ERREUR

(30) Priorität: 02.10.2003 DE 10346006
(43) Veröffentlichungstag der Anmeldung: 14.06.2006
(73) Patentinhaber: NOKIA SIEMENS NETWORKS GMBH & CO. KG, 81541 München (DE)
(72) Erfinder: DILLINGER, Markus, 81737 München (DE); FALK, Rainer, 85386 Eching (DE)
(86) Internationale Anmeldenummer: PCT/EP2004/052381
(87) Internationale Veröffentlichungsnummer: WO 2005/034550

(56) Entgegenhaltungen:
- PREHOFER C ET AL: "Synchronized reconfiguration of a group of mobile nodes in ad-hoc networks" 23. Februar 2003 (2003-02-23), , PAGE(S) 400-405 , XP010637839 Seite 400, linke Spalte, Zeile 1 - Seite 401, linke Spalte, Zeile 19 Seite 404, rechte Spalte, Abschnitt 3.2
- BEACH M ET AL: "THE EUROPEAN PROJECT TRUST - RECONFIGURABLE TERMINALS AND SUPPORTING NETWORKS LE PROJECT EUROPEEN TRUST - TERMINAUX RECONFIGURABLES ET RESEAUX DE SUPPORT" ANNALES DES TELECOMMUNICATIONS - ANNALS OF TELECOMMUNICATIONS, PRESSES POLYTECHNIQUES ET UNIVERSITAIRES ROMANDES, LAUSANNE, CH, Bd. 57, Nr. 7/8, Juli 2002 (2002-07), Seiten 653-676, XP001124782 ISSN: 0003-4347
- MICOCCI S ET AL: "IST-2001-34091 SCOUT Deliverable D 4.1.1 Requirements on Network and Security Architecture and Traffic Management Schemes for Download Traffic based on IP Principles in Cellular and Ad Hoc Networks; PAGES 1-4,79-100" [Online] 31. Oktober 2002 (2002-10-31), , XP002313996 Gefunden im Internet: URL:http://www4.in.tum.de/~scout/deli/D4.1 .1_v1.0.zip> [gefunden am 2005-01-18] das ganze Dokument
- RAVASISO G ET AL: "IST-2001-34091 SCOUT Deliverable D 4.1.2 Architecture, Functions and Security Analysis and Traffic Management Schemes for IP-Based Mobile Networks and Re-configurable Terminals in Cellular and Ad-Hoc Networks; PAGES 1-5,105-111" [Online] 30. Januar 2004 (2004-01-30), , XP002313997 Gefunden im Internet: URL:http://www4.in.tum.de/~scout/deli/D4.1 .2_final.zip> [gefunden am 2005-01-18] das ganze Dokument

## Beschreibung

Die Erfindung betrifft ein Funksystem, eine Funk-Kommunikationseinrichtung sowie ein Verfahren zum Verändern einer Funk-Schnittstelle.

Rekonfigurierbare Funksysteme (**S**oftware **D**efined **R**adio **S**ystems (SDR-Systems)) werden in Anbetracht der großen Zahl weltweit verwendeter unterschiedlicher Funk-Schnittstellen in der künftigen Mobilfunk-Kommunikation eine bedeutende Rolle einnehmen. Ein Rekonfigurierbares Funksystem ermöglicht eine dynamische und flexible Anpassung von Funkeigenschaften und ermöglicht somit auch eine effiziente Ausnutzung der zur Verfügung stehenden Funk-Ressourcen.

Es ist wichtig, dass eine Funk-Kommunikationseinrichtung eines rekonfigurierbaren Funksystems ordnungsgemäß funktioniert, um die Stabilität und Verfügbarkeit des Funksystems zu gewährleisten. Eine fehlerhaft konfigurierte Funk-Kommunikationseinrichtung kann andere Benutzer oder Einrichtungen, das heißt andere Funk-Kommunikationseinrichtungen oder sogar eine gesamte Funkzelle oder andere Funksysteme stören und damit beeinträchtigen.

Beispielsweise könnte für den Fall, dass keine geeigneten Schutzmaßnahmen getroffen werden, eine fehlerhaft konfigurierte Funk-Kommunikationseinrichtung den Flugfunk stören und damit eine erhebliche Unfallgefahr verursachen.

Unabhängig von den oben beschriebenen Störungen kann eine fehlerhafte Konfiguration einer Funk-Kommunikationseinrichtung ferner dazu führen, dass die Funk-Kommunikationseinrichtung nicht, wie von dem Benutzer erwartet, genutzt werden kann.

Eine beispielhafte Verwaltungsarchitektur eines rekonfigurierbaren Funksystems ist in [1] oder in [2] beschrieben.

Ferner ist in [3] ein Telekommunikationsnetzwerk mit einer Mehrzahl von Endgeräten und einem zentralen Server beschrieben, wobei der Server einen Bereich zur Konfiguration der Endgeräte aufweist, eine Einheit zum Übertragen von Software und/oder Daten, welche für die erfasste Hardware der Endgeräte geeignet ist, zu dem Endgerät und eine Einrichtung zur Konfiguration der Software auf dem jeweiligen Endgerät. In den Endgeräten ist eine Sendeeinrichtung vorgesehen zum Senden eines Konfigurationscodes an den Server, mit welchem Konfigurationscode die Hardware-Konfiguration und die Software-Konfiguration des Endgeräts identifiziert wird.

Weiterhin ist in [4] eine Mobilfunkstation beschrieben, die derart eingerichtet ist, dass die in der Mobilfunkstation implementierte Software zumindest teilweise verändert werden kann. In einer mit dem Mobilfunk-Kommunikationsnetzwerk verbundenen Software-Datenbank sind die aktuellen Versionen der auf den Mobilfunkstationen implementierten Software gespeichert. Eine Download-Einheit überprüft die auf den Mobilfunkstationen installierte Software mittels der Software-Datenbank und lädt bei Bedarf die erforderliche Software in die Mobilfunkstation.

Ferner ist in [5] ein Mobilfunk-Kommunikationssystem beschrieben, bei dem bei Auftreten eines Authentifikationsfehlers im Rahmen der Authentifikation eines Mobilfunk-Endgeräts bei dem Mobilfunk-Kommunikationsnetz den Mobilfunk-Kommunikationsgerät eine entsprechende Ansage übermittelt wird. Ferner wird von dem Mobilfunk-Kommunikationsnetz ein Ruf zu einem Kundendienst-Zentrum gesendet, um das Mobilfunkendgerät umzuprogrammieren.

In [6] ist eine Netzwerkeinrichtung offenbart, die sich in einem Debug-Modus befindet. Die Netzwerkeinrichtung kennt den Namen des zuletzt gut funktionierenden Images und der zugehörigen Konfigurationsdatei, welche beide auf einem Server-Rechner gespeichert sind. Die Netzwerkeinrichtung fordert die Übertragung dieses zuletzt gut funktionierenden Images und der zugehörigen Konfigurationsdatei von dem Serverrechner an, beispielsweise mittels des TFTP-Kommunikationsprotokolls (**T**rivial **F**ile **T**ransfer **P**rotocol).

Um die oben beschriebenen Störungen in einem FunkKommunikationssystem aufgrund einer fehlerhaften Funk-Kommunikationseinrichtung zu vermeiden wurde, wie in [7] beschrieben, für eine rekonfigurierbare Funk-Kommunikationseinrichtung vorgesehen, eine fehlerhaft konfigurierte Funk-Kommunikationseinrichtung zu erkennen und zu deaktivieren. Eine Funk-Kommunikationseinrichtung kann eine fehlerhafte Konfiguration entweder selbst mittels einer eingebauten Überwachungsfunktion erkennen oder es bekommt die fehlerhafte Konfiguration von einem in dem Funksystem vorgesehenen Überwachungsrechner aus signalisiert (beispielsweise mittels einer expliziten Mitteilung, dass ein Fehler auftrat, oder implizit durch Ausbleiben einer Bestätigungsnachricht, dass die Funk-Kommunikationseinrichtung ordnungsgemäß funktioniert).

Unter einer Konfiguration sind in diesem Zusammenhang insbesondere Eigenschaften der Funk-Kommunikationseinrichtung wie Funkeigenschaften, beispielsweise die Betriebsfrequenz, ein Betriebs-Frequenzband, die Sendeleistung, und/oder die verwendete Modulationsart zu verstehen, aber auch weitere Komponenten, wie verwendete Kommunikationsprotokolle oder verwendete Codiereinrichtungen oder Decodiereinrichtungen (zum Codieren/Decodieren von Sprachdaten, Bilddaten, Videodaten).

Wenn eine fehlerhaft konfigurierte Funk-Kommunikationseinrichtung erkannt wurde, so werden korrektive Maßnahmen ergriffen, um das Problem zu beseitigen. Wie oben beschrieben, wurde in [7] vorgeschlagen, die betroffene Funk-Kommunikationseinrichtung entweder für eine gewisse Zeitdauer oder dauerhaft zu deaktivieren. Bei einer solchen Deaktivierung ist natürlich keine Kommunikation unter Verwendung der Funk-Kommunikationseinrichtung mehr möglich. Die Folge ist, dass die betroffene Funk-Kommunikationseinrichtung nicht mehr verwendet werden kann. Dieser Fall kann ebenfalls eintreten, wenn die Konfiguration der Funk-Kommunikationseinrichtung so fehlerhaft ist, dass keine Kommunikation mehr möglich ist.

Wenn der Fehler so schwerwiegend ist, dass es nicht ausreichend ist, die Funk-Kommunikationseinrichtung für eine gewisse Zeit zu deaktivieren, so muss die fehlerhafte Konfiguration auf andere Weise beseitigt werden. Dies kann beispielsweise erfordern, dass die Funk-Kommunikationseinrichtung zum Hersteller geschickt oder in eine Werkstatt gebracht wird, wo der aufgetretene Fehler dann behoben werden kann. Eine solche Maßnahme ist natürlich mit Unannehmlichkeiten für den Benutzer verbunden, da die Funk-Kommunikationseinrichtung für eine gewisse Zeit nicht verwendet werden kann. Die Folgen wären eine geringe Kundenzufriedenheit und hohe Servicekosten.

In [8] ist eine Java-Spezifikation eines Profils einer mobilen Kommunikationseinrichtung beschrieben.

Ferner ist in [9] die sogenannte **M**obile **Ex**ecution **E**nvironment Functional Description (MExE) beschrieben.

[10] beschreibt eine standardisierte Sicherheitsarchitektur in einem Mobilfunksystem der dritten Generation.

Prehofer C. et al. "Synchronized reconfiguration of a group of mobile nodes in ad-hoc networks", 23. Februar 2003, Seite 400-405, beschreibt eine Funk-Kommunikationseinrichtung, welche die Funk-Schnittstelle im Fehlerfall selbständig rekonfiguriert. Diese interne Fehlerbehandlung sieht vor, dass eine fehlerhafte Normalbetriebs-Konfiguration deaktiviert wird und die Funk-Schnittstelle mit der fehlerfreien alten Konfiguration rekonfiguriert wird. Diese nun rekonfigurierte Funk-Schnittstelle wird zur weiteren Funk-Kommunikation verwendet. Der Nachteil der beschriebenen Funk-Kommunikationseinrichtung ist, dass keine Ursache für den aufgetretenen Fehler untersucht werden kann. Zudem verursacht ein Fehlerfall in einer einzigen Funk-Kommunikationseinrichtung eine Rekonfiguration aller Funk-Kommunikationseinrichtungen des ad hoc FunkSystems.

Der Erfindung liegt somit das Problem zugrunde, eine gegenüber dem Stand der Technik einfachere und benutzerfreundlichere Lösung zur Behandlung eines Fehlers in einem rekonfigurierbaren Funksystem bereitzustellen.

Durch die Lösung soll ermöglicht werden, dass eine fehlerhaft konfigurierte Funk-Kommunikationseinrichtung nicht deaktiviert werden muss und erst nach umständlichen und teuren Maßnahmen wieder in den ordnungsgemäßen Betrieb genommen werden kann.

Weiterhin soll durch die Lösung ermöglicht werden, dass eine individuelle Fehleranalyse und -reparatur durchgeführt werden kann, ohne dass hierzu die betroffene Funk-Kommunikationseinrichtung deaktiviert werden muss. Auch soll möglichst verhindert werden, dass von der Fehlerbehandlung das komplette Funksystem beeinträchtigt wird.

Das Problem wird durch das Funksystem, durch die Funk-Kommunikationseinrichtung sowie durch das Verfahren zum Rekonfigurieren einer Funk-Schnittstelle mit den Merkmalen gemäß den unabhängigen Patentansprüchen gelöst.

Ein Funksystem weist mindestens eine Funk-Kommunikationseinrichtung auf. Die Funk-Kommunikationseinrichtung weist eine rekonfigurierbare Funkschnittstelle auf sowie einen ersten Speicher, in dem eine Normalbetrieb-Konfigurationsinformation gespeichert ist und einen zweiten Speicher in dem eine Fehlerfall-Konfigurationsinformation gespeichert ist.

Es ist in diesem Zusammenhang anzumerken, dass der erste Speicher und der zweite Speicher ein gemeinsamer Speicher sein können und die beiden Konfigurationsinformationen lediglich in unterschiedlichen Speicherbereichen des Speichers gespeichert sind.

Ferner ist in der Funk-Kommunikationseinrichtung eine Steuereinheit vorgesehen zum Konfigurieren der rekonfigurierbaren Funkschnittstelle. Das Funksystem weist außerdem eine Fehlerfall-Erkennungseinrichtung auf, die eingerichtet ist zum Erkennen eines Fehlers der rekonfigurierbaren Funk-Schnittstelle. Eine ebenfalls in dem Funksystem vorgesehene Fehlerfall-Behandlungseinrichtung ist derart eingerichtet, dass unter Verwendung der Fehlerfall-Konfigurationsinformation eine Fehlerbehandlung bereitgestellt wird, so dass die rekonfigurierbare Funkschnittstelle konfiguriert wird. Die Fehlerfall-Konfigurationsinformation wird hierbei verwendet, um eine Kommunikation zwischen der Funk-Kommunikationseinrichtung und der Fehlerfall-Behandlungseinrichtung zu ermöglichen.

Die Fehlerfall-Erkennungseinrichtung kann sowohl in einem Rechner des Funk-Kommunikationsnetzes vorgesehen sein als auch in der Funk-Kommunikationseinrichtung integriert sein. Die Fehlerfall-Behandlungseinrichtung ist vorzugsweise in einem Rechner des Funk-Kommunikationsnetzes realisiert.

Somit weist die Funk-Kommunikationseinrichtung gemäß einem Aspekt der Erfindung eine rekonfigurierbare Funkschnittstelle auf sowie einen ersten Speicher, in dem eine Normalbetrieb-Konfigurationsinformation gespeichert ist und einen zweiten Speicher, in dem eine Fehlerfall-Konfigurationsinformation gespeichert ist. Ferner ist eine Steuereinheit zum Konfigurieren der rekonfigurierbaren Funkschnittstelle vorgesehen. Weiterhin ist eine Fehlerfall Erkennungseinrichtung in der Funk-Kommunikationseinrichtung vorgesehen, die eingerichtet ist zum Erkennen eines Fehlers der rekonfigurierbaren Funkschnittstelle. Die Steuereinheit zum Konfigurieren der rekonfigurierbaren Funk-Schnittstelle ist derart eingerichtet ist, dass bei Auftreten eines Fehlerfalls unter Verwendung der Fehlerfall-Konfigurationsinformation eine Kommunikationsverbindung zu einem eine Fehlerbehandlung bereitstellenden Rechner aufgebaut wird.

Bei einem Verfahren zum Verändern einer rekonfigurierbaren Funkschnittstelle wird ein Fehler der rekonfigurierbaren Funkschnittstelle erkannt und die rekonfigurierbare Funkschnittstelle wird unter Verwendung einer in einer Funk-Kommunikationseinrichtung gespeicherten Fehlerfall-Konfigurationsinformation konfiguriert. Über die mit der Fehlerfall- Konfigurationsinformation konfigurierte Funk-Schnittstelle wird eine Verbindung zu einer Fehlerfall-Behandlungseinrichtung aufgebaut, von der Informationen für eine Fehlerbehandlung bereitgestellt werden.

Anschaulich kann die Erfindung darin gesehen werden, dass nicht mehr, wie gemäß dem Stand der Technik, bei Erkennen eines Fehlers einer rekonfigurierbaren Funkschnittstelle die fehlerbehaftete Funk- Kommunikationseinrichtung einfach abgeschaltet wird, sondern es ist in der Funk- Kommunikationseinrichtung eine Fehlerfall- Konfigurationsinformation gespeichert, welche im Rahmen einer Fehlerfall- Behandlung genutzt wird als Basis für die Neu-Konfiguration der rekonfigurierbaren Funkschnittstelle. Die Fehlerfall-Konfigurationsinformation stellt somit anschaulich eine Rückfall-Konfiguration der Funk-Kommunikationseinrichtung dar.

Somit wird erfindungsgemäß das Problem behandelt, wie Korrekturmaßnahmen für ein fehlerhaft konfiguriertes Funkterminal, das heißt eine fehlerhafte Konfiguration der Funk-Kommunikationseinrichtung, erfolgen können, wenn die Funk-Kommunikation wegen einer erkannten Fehlfunktion des Funkterminals deaktiviert wurde oder wenn das Funk-Kommunikationsgerät so fehlerhaft konfiguriert ist, dass keine Kommunikation mehr möglich ist. Ferner wird erfindungsgemäß das Problem behandelt, dass auf einem konfigurierbaren Funk-Kommunikationsgerät unabhängig von einer möglicherweise fehlerhaften Konfiguration der Funkschnittstelle in jedem Fall ein Notruf, das heißt ein Aufbau einer Notruf-Kommunikationsverbindung ermöglicht sein soll.

Damit schafft die Erfindung anschaulich eine Funk-Kommunikationseinrichtung zur drahtlosen Kommunikation mit einem Kommunikationsnetzwerk, wobei die Funkeigenschaften der Funk-Kommunikationseinrichtung rekonfiguriert werden können, wobei ferner in dem Funksystem, vorzugsweise in der Funk-Kommunikationseinrichtung, eine Überwachungsfunktion zum Erkennen einer fehlerhaften Konfiguration der Funk-Kommunikationseinrichtung vorgesehen ist und wobei die Funk-Kommunikationseinrichtung ferner eine Steuereinheit enthält, die im Falle einer erkannten fehlerhaften Konfiguration vorgegebene korrektive Maßnahmen, vorzugsweise unter Verwendung der in der Funk-Kommunikationseinrichtung gespeicherten Fehlerfall-Konfigurationsinformation einleiten kann.

Das Funksystem sowie die Funk-Kommunikationseinrichtung sind vorzugsweise als Mobilfunksystem beziehungsweise Mobilfunk-Kommunikationseinrichtung eingerichtet.

Ferner ist in der Funk-Kommunikationseinrichtung eine Notruf-Einrichtung vorgesehen, welche derart eingerichtet ist, dass ein Aufbau einer Notruf-Kommunikationsverbindung mit dem Funk-Kommunikationsnetz des Funksystems selbst in einem Fehlerfall bereitgestellt wird.

In der Normalbetrieb-Konfigurationsinformation sowie in der Fehlerfall-Konfigurationsinformation sind vorzugsweise Funkeigenschaften der rekonfigurierbaren Funk-Schnittstelle vorgegeben.

Gemäß einer Ausgestaltung der Erfindung ist es vorgesehen, dass in der Fehlerfall-Konfigurationsinformation sowie in der Normalbetrieb-Konfigurationsinformation zumindest ein Teil der folgenden Funkeigenschaften der rekonfigurierbaren Funk-Schnittstelle, vorzugsweise der rekonfigurierbaren Mobilfunk-Schnittstelle enthalten sind:
- eine Sendeleistung der (Mobil-)Funk-Kommunikationseinrichtung;
- ein im Rahmen der (Mobil-)Funk-Kommunikation verwendendes Modulationsverfahren;
- eines oder mehrere im Rahmen der (Mobil-)Funk-Kommunikation zu verwendende Frequenzbänder sowie
- ein im Rahmen der (Mobil-)Funk-Kommunikation zu verwendendes Kommunikationsprotokoll.

Die Funk-Kommunikationseinrichtung ist vorzugsweise als ein Funktelefon, besonders bevorzugt als ein Mobilfunktelefon eingerichtet, alternativ als ein Funkmodul, vorzugsweise als ein Mobilfunkmodul.

Gemäß einer anderen Ausgestaltung der Erfindung ist es vorgesehen, dass die Fehlerfall-Behandlungseinrichtung in einem eigenen, von anderen zum Betrieb der Funk-Kommunikationseinrichtung verwendeten Einheiten getrennten, d.h. separaten, elektronischen Chip integriert ist.

Somit enthält anschaulich das Funk-Kommunikationsnetzwerk des Funksystems, genauer ein Rechner in dem Funk-Kommunikationsnetzwerk eine Reparaturfunktion, die Fehlerfall-Behandlungseinrichtung, und das Funk-Kommunikationsgerät enthält Informationen für eine Fehlerfall-Konfiguration, die Fehlerfall-Konfigurationsinformation, welche die Kommunikation mit dieser Reparaturfunktion ermöglicht. Falls von einer in dem Funk-Kommunikationsnetz, alternativ in der Funk-Kommunikationseinrichtung vorgesehenen Überwachungsfunktion (die Fehlerfall-Erkennungseinrichtung) zum Erkennen einer fehlerhaften Konfiguration eine fehlerhafte Konfiguration erkannt wird, so aktiviert die Steuereinheit anstatt der aktuellen, fehlerhaften Konfiguration, welche beschrieben wird mittels der Normalbetrieb-Konfigurationsinformation, die Fehlerfallkonfiguration, das heißt die Fehlerfall-Konfigurationsinformation. Die Fehlerfall-Konfiguration wird verwendet, um eine Kommunikation zwischen dem Funk-Kommunikationsgerät und der Reparaturfunktion, welche sich vorzugsweise in dem Funk-Kommunikationsnetz befindet, zu ermöglichen, wobei im Rahmen der Kommunikation zwischen Funk-Kommunikationsgerät und der Reparaturfunktion eine Konfiguration bestimmt wird, welche die Steuereinheit an Stelle der Fehlerfallkonfiguration (das heißt der Fehlerfall-Konfigurationsinformation) aktiviert.

Das Funk-Kommunikationsnetzwerk kann ein Netzwerk eines zellulären Mobilfunk-Kommunikationsnetzes, ein öffentliches Kommunikationsnetz, beispielsweise basierend auf dem Internet, oder ein nicht öffentliches Kommunikationsnetz, beispielsweise ein Intranet, ein In-House-Kommunikationsnetzwerk sowie ein Personal Area Network sein.

Vorzugsweise ist die in der Funk-Kommunikationseinrichtung gespeicherte Fehlerfall-Konfigurationsinformation gar nicht oder nur unter speziellen vorgegebenen Sicherheitsvorkehrungen, die unterschiedlich zu denen sind, welche zur Rekonfiguration der rekonfigurierbaren Mobilfunkschnittstelle im Normalbetrieb sind, geändert werden.

Wie oben beschrieben ist gemäß einer Ausgestaltung der Erfindung in der Funk-Kommunikationseinrichtung zusätzlich eine spezielle Hardware-Komponente enthalten, vorzugsweise ein separater elektronischer Chip, welche nur bei einem auftretenden Fehlerfall verwendet wird. Beispielsweise ist es vorgesehen, einen üblichen GSM-Chipsatz zur eigentlichen Mobilfunk-Kommunikation zu verwenden sowie einen speziellen zusätzlichen Chip, in dem die Funktionalität der Fehlerfall-Erkennungseinrichtung implementiert ist und gegebenenfalls die Fehlerfall-Konfigurationsinformation gespeichert ist.

Die im Rahmen der Fehlerfall-Behandlung und Reparatur der Konfiguration der Funkschnittstelle vorgesehenen Schritte, welche von der Steuereinheit oder der Fehlerfall-Erkennungseinrichtung und der in dem Funk-Kommunikationsnetz vorgesehenen Reparaturfunktion durchgeführt werden und die im Rahmen dieser Bearbeitung verwendeten Informationen, welche zwischen der Funk-Kommunikationseinrichtung und der Fehlerfall-Behandlungseinrichtung beziehungsweise der Reparaturfunktion ausgetauscht werden, können je nach Ausgestaltung des gewünschten Verfahrens vorgegeben werden. Sie können insbesondere einen oder mehrere der folgenden Schritte aufweisen:
- eine Bestimmung der Identität der betroffenen Funk-Kommunikationseinrichtung;
- eine Bestimmung der Identität des Benutzers (Teilnehmers) der betroffenen Funk-Kommunikationseinrichtung beziehungsweise des Mobilfunk-Kommunikationsgeräts;
- eine Bestimmung der fehlerhaften Konfiguration; das heißt, dass die Normalbetrieb-Konfiguration zur Information zu der Reparaturfunktion, anders ausgedrückt zu der Fehlerfall-Behandlungseinrichtung, wenn diese in dem Funk-Kommunikationsnetz des Funksystems vorgesehen ist, übertragen wird; diese Information kann entweder direkt von der betroffenen Funk-Kommunikationseinrichtung geladen werden, alternativ von einem Server in dem Kommunikationsnetzwerk, auf dem Information über die fehlerhafte Normalbetrieb-Konfigurationsinformation gespeichert ist (gemäß einer Ausgestaltung der Erfindung ist dieser Server der Rekonfigurations-Manager); die Normalbetrieb-Konfigurationsinformation weist eine oder mehrere der folgenden Informationen auf: Angaben zum Hersteller, Typ, Version und/oder Seriennummer der Funk-Kommunikationseinrichtung, eine Bezeichnung und Version von installierter Software sowie weitere vorgebbare Konfigurationsparameter der Funk-Kommunikationseinrichtung;
- eine Bestimmung des Grundes, der zur Aktivierung der Fehlerfall-Konfigurationsinformation geführt hat;
- eine Auswertung von Protokoll-Daten (Log-Daten) wobei die Protokolldaten von der Funk-Kommunikationseinrichtung oder von einem in dem Funk-Kommunikationsnetz vorgesehenen Server-Rechner geladen werden;
- ein Laden eines Diagnoseprogramms auf die betroffene Funk-Kommunikationseinrichtung und Starten und Ausführen der Diagnose unter Verwendung des Diagnoseprogramms;
- ein Laden eines Reparaturprogramms, das die fehlerhafte Konfiguration durch eine funktionierende Konfiguration mittels einer neuen Konfigurationsinformation ersetzt, auf die betroffene Funk-Kommunikationseinrichtung und Start des Reparaturprogramms,
- ein Löschen, Ersetzen oder Aktualisieren von auf der betroffenen Funk-Kommunikationseinrichtung gespeicherten Programmmodulen sowie
- ein Setzen von entsprechenden gewünschten Konfigurationsparametern, welche eine neue, aktualisierte Normalbetrieb-Konfigurationsinformation bilden.

Mittels einer in der Funk-Kommunikationseinrichtung ebenfalls vorgesehenen Anzeigeeinheit kann auf der Funk-Kommunikationseinrichtung dem Benutzer angezeigt werden und dieser somit informiert werden, dass ein Fehlerfall aufgetreten ist und erkannt wurde. Vorzugsweise wird der Benutzer über den Fortschritt der Reparaturmaßnahmen informiert, beispielsweise wiederum unter Verwendung der Anzeigeeinheit der Funk-Kommunikationseinrichtung, soweit diese vorhanden ist.

Gemäß einer anderen Ausgestaltung der Erfindung ist es, vorzugsweise zusätzlich, vorgesehen, dass die beschriebenen Maßnahmen initiiert werden, auch wenn kein Fehlerfall in der Funk-Kommunikationseinrichtung erkannt wurde. Die Initiierung kann von dem Benutzer der Funk-Kommunikationseinrichtung selbst oder von einem Rechner, allgemein einer entsprechend eingerichteten Instanz, des Kommunikationsnetzes aus angestoßen werden, beispielsweise in dem Fall, wenn auch nur ein Verdacht auf eine Fehlfunktion besteht. Auf diese Weise ist es möglich, größeren Schaden durch das tatsächliche Auftreten einer Fehlfunktion zu vermeiden.

Die Fehlerfall-Konfigurationsinformation und die dazugehörige Reparaturfunktion werden gemäß einer Ausgestaltung der Erfindung durch weitere Maßnahmen ergänzt, die im folgenden beschrieben werden:

Gemäß einer Ausgestaltung der Erfindung ist es vorgesehen, die Fehlerfall-Konfigurationsinformation in geeigneter Weise zu definieren. Die Fehlerfall-Konfigurationsinformation soll einerseits in der Funk-Kommunikationseinrichtung einfach und mit geringem Aufwand zu realisieren sein. Andererseits soll auch auf Seite des Funk-Kommunikationsnetzes der Aufwand möglichst gering gehalten werden. Um dies zu gewährleisten ist es vorteilhaft, ein bereits verfügbares Funksystem wie beispielsweise GSM, zu verwenden, aber für die Fehlerfall-Konfigurationsinformation in der Funk-Kommunikationseinrichtung nur unbedingt erforderliche Funktionen des Funksystems zu implementieren. Dadurch wird der Aufwand auf der Endgeräteseite, das heißt in der Funk-Kommunikationseinrichtung, gering gehalten und es kann ferner bereits vorhandene Mobilfunk-Infrastruktur, allgemein Funk-Infrastruktur vorteilhaft verwendet werden.

Während in dem europäischen Raum ein nahezu flächendeckendes GSM-Mobilfunk-Kommunikationsnetz vorhanden ist, ist dies nicht in allen Regionen der Welt gewährleistet.

Gemäß einer Ausgestaltung der Erfindung ist es aus diesem Grund vorteilhaft, auch die Fehlerfall-Konfigurationsinformation selbst ändern zu können. Dies ermöglicht es dann auch in einem Mobilfunk-Kommunikationsnetz, das in einer anderen Region der Welt verbreiteter und damit dort geeigneter ist als GSM, zu verwenden, beispielsweise das System DAMPS (**D**igital **A**dvanced **M**obile **P**hone **S**ervice) oder IS-95. Die Änderung der Fehlerfall-Konfigurationsinformation erfolgt vorzugsweise unter besonderen Sicherheitsvorkehrungen. Insbesondere ist es vorgesehen, dass die Fehlerkonfiguration nicht im Rahmen einer normalen Rekonfiguration, das heißt in gleicher Weise wie die Normalbetrieb-Konfigurationsinformation, gespeichert in dem ersten Speicher, geändert werden kann. Dies führt dazu, dass eine Normalbetrieb-Konfiguration für den regulären Betrieb, das heißt den Normalbetrieb, vorgesehen ist, die flexibel und dynamisch an Benutzerwünsche, lokal verfügbare Funkdienste, aktuelle Auslassung des Kommunikationsnetzes und aktuell genutzte Dienste des Funksystems, etc. angepasst werden kann.

Anders ausgedrückt kann die Normalbetrieb-Konfigurationsinformation auf einfache Weise geändert werden, die Fehlerfall-Konfigurationsinformation nur bei Erfüllung der entsprechend vorgesehenen erhöhten Sicherheitsvoraussetzungen.

Für den Fall, dass bei der Konfiguration für den Normalbetrieb ein Fehler aufgetreten ist, ist somit die Fehlerfall-Konfigurationsinformation vorgesehen. Die Fehlerfall-Konfigurationsinformation kann, wenn überhaupt, nur unter besonderen Schutzvorkehrungen, vorzugsweise kryptographischen Schutzvorkehrungen, geändert werden. Auf diese Weise ist es möglich, die Kontrolle über die Konfiguration für den Normalbetriebe relativ offen zu gestalten, da in einem auftretenden Fehlerfall, wenn beispielsweise im Rahmen der Konfiguration der Funkschnittstelle der Funk-Kommunikationseinrichtung etwas schief geht, unter Verwendung der Fehlerfall-Konfigurationsinformation wieder eine stabile, funktionierende Konfiguration der Funk-Kommunikationseinrichtung bereitgestellt werden kann.

Wenn die Fehlerfall Konfigurationsinformation in dem zweiten Speicher geändert werden kann, so werden für eine Änderung der Fehlerfall-Konfigurationsinformation gemäß einer Ausgestaltung der Erfindung besondere, vorzugsweise kryptographische, Schutzvorkehrungen vorgesehen.

Das bedeutet insbesondere, dass eine Konfigurationsinformation, wie sie im laufenden Betrieb definiert und verwendet werden kann, nicht ohne weiteres als Fehlerfall-Konfigurationsinformation festgelegt werden kann und dass nicht jeder, der die normale reguläre Konfiguration, das heißt die Normalbetrieb-Konfigurationsinformation, definieren oder ändern kann, auch die Fehlerfall-Konfigurationsinformation definieren oder ändern kann.

Vor allem in dem Fall, bei dem der Betreiber im laufenden Betrieb, das heißt im Normalbetrieb der Funk-Kommunikationseinrichtung eine Konfiguration unter Verwendung von Software mehrerer Hersteller selbst definieren kann, ist es vorteilhaft, wenn als Fehlerfall-Konfigurationsinformation nur eine solche Konfigurationsinformation verwendet werden kann, die von dem Hersteller der Funk-Kommunikationseinrichtung selbst als Fehlerfall-Konfigurationsinformation autorisiert wurde.

Es ist jedoch in einer alternativen Ausgestaltung der Erfindung auch vorgesehen, dass ein Service-Provider für die Definition der Fehlerfall-Konfigurationsinformation verantwortlich ist. Dies kann ein spezieller, diesen jeweiligen Dienst anbietender Service-Provider sein oder der Communication Service-Provider, der seinen Kunden (Teilnehmern) vorgebbare Kommunikationsdienste anbietet. In diesem Fall kann nur der entsprechende Service-Provider eine Fehlerfall-Konfigurationsinformation ändern.

Übliche Sicherheitsmechanismen können in diesem Zusammenhang verwendet werden, um den Zugriff auf die Fehlerfall-Konfigurationsinformation abzusichern. So ist beispielsweise gemäß einer Ausgestaltung der Erfindung die Authentisierung desjenigen, der die Fehlerfall-Konfigurationsinformation ändern möchte, beispielsweise unter Verwendung eines Passwortes oder kryptographischer Sicherheitsmechanismen zur Authentisierung unter Verwendung eines geheimen kryptographischen Schlüssels oder eines öffentlichen kryptographischen Schlüssels bereitzustellen.

Ferner ist gemäß einer anderen Ausgestaltung der Erfindung vorgesehen, die Kommunikation mit der Funk-Kommunikationseinrichtung beispielsweise unter Verwendung der kryptographisch gesicherten Kommunikationsprotokolle IPsec oder SSL/TSL abzusichern. Ferner kann eine Zugriffskontrolle vorgesehen sein, das heißt eine Prüfung, ob eine zugreifende Kommunikationseinrichtung überhaupt zum Zugriff auf die Fehlerfall-Konfigurationsinformation berechtigt ist sowie ein Schutz der verwendeten Softwaremodule, um ihren Anbieter und ihre Integrität zu prüfen, beispielsweise mittels eines signierten Codes wie beispielsweise in [9] in MExE 23.057 oder in [8] (JSR-118 MIDP 2.0) beschrieben. Diese an sich bekannten Verfahren werden vorzugsweise erfindungsgemäß verwendet, um sowohl den Zugriff auf die reguläre Konfiguration, das heißt die Normalbetrieb-Konfigurationsinformation wie auch auf die Fehlerfall-Konfigurationsinformation abzusichern.

Insbesondere ist es vorgesehen, die gleichen Sicherheitsmechanismen für die Absicherung des Zugriffs auf die Normalbetrieb-Konfigurationsinformation wie für die Fehlerfall-Konfigurationsinformation zu verwenden. Der Zugriff auf die Fehlerfall-Konfigurationsinformation zu deren Änderung wird jedoch gemäß einer entsprechend vorgegebenen Sicherheitspolitik restriktiver festgelegt als ein Zugriff auf die Normalbetrieb-Konfigurationsinformation zu deren Änderung. Dies bedeutet, dass andere, restriktivere Politik-Information (wer ist berechtigt), möglicherweise auch anderes kryptographisches Material mit entsprechend höherer kryptographischer Sicherheit verwendet wird im Rahmen der Sicherung der Fehlerfall-Konfigurationsinformation als zur Sicherung der Normalbetrieb-Konfigurationsinformation.

Ferner ist es gemäß einer anderen Ausgestaltung der Erfindung vorgesehen, dass die Funk-Kommunikationseinrichtung, welche die Fehlerfall-Konfigurationsinformation aktiviert hat und mit der Fehlerfall-Behandlungseinrichtung, das heißt der Reparaturfunktion, in dem Kommunikationsnetzwerk eine Kommunikationsverbindung aufbauen möchte, dies beim Aufbau der Kommunikationsverbindung gegenüber dem Kommunikationsnetz signalisiert. Auf diese Weise erhält das Kommunikationsnetz die Möglichkeit, auf eine Fehlerfall-Konfigurationsinformation besonders zu reagieren. Es ist beispielsweise vorgesehen, spezielle, über die normale Überwachung des Funk-Kommunikationsgeräts hinausgehende Überwachungsfunktionen, einzuleiten, um ein möglicherweise nach wie vor fehlerhaftes Funk-Kommunikationsendgerät zu erkennen. Ferner können die nutzbaren Dienste eingeschränkt werden. Das bedeutet, dass nur solche Dienste in einem entsprechenden Fehlerfall genutzt werden können, die für eine solche Fehlerfall-Konfigurationsinformation vorgesehen sind. Diese in einem Fehlerfall nutzbaren Dienste können von dem verwendeten Funk-Kommunikationsnetzwerk festgelegt werden. Ebenso ist es möglich, dass in dem jeweiligen Benutzerprofil des Benutzers der Funk-Kommunikationseinrichtung Einträge gespeichert sind, welche die nutzbaren Dienste in einem Fehlerfall angeben.

In einem Mobilfunksystem der dritten Generation ist das Benutzerprofil vorzugsweise in einem Rechner des **H**ome **S**ubscriber Systems (HSS) gespeichert.

Wenn beim Aufbau der Funk-Kommunikationsverbindung signalisiert wird, dass sich die Funk-Kommunikationseinrichtung in einer Fehlerfall-Konfiguration befindet und eine Reparaturfunktion unter Verwendung der Fehlerfall-Konfigurationsinformation aufrufen möchte, so hat ein Betreiber des Kommunikationsnetzwerkes die Möglichkeit, den Netzzugang abhängig von seinen Vorgaben auch dann zu gestatten, wenn keine erfolgreiche Benutzerauthentisierung möglich oder erfolgt ist oder wenn keine Berechtigung für die Nutzung der regulären Kommunikationsdienste besteht.

Dieses Verhalten entspricht der Unterstützung für einen Notruf, das heißt für den Aufbau einer Notruf-Kommunikationsverbindung, der ebenfalls ohne erfolgte Benutzerauthentisierung und Prüfung der Berechtigung des Benutzers hinsichtlich der Zugriffserlaubnis auf den jeweiligen Dienst möglich ist (beziehungsweise die Berechtigung für einen Notruf ist immer gegeben).

In diesem Fall ist die Funk-Kommunikationseinrichtung gemäß [10], Abschnitt 6.4.9 eingerichtet, wobei das Verhalten für einen Notruf insbesondere in [10], Abschnitt 6.4.9.2 beschrieben ist, unter welchen Umständen bei einem Notruf auf eine entsprechende Sicherheitsprozedur verzichtet werden darf. Die Funk-Kommunikationseinrichtung ist gemäß einer Ausgestaltung der Erfindung wie dort beschrieben eingerichtet.

In der Funk-Kommunikationseinrichtung können Sicherheitsparameter für den Fehlerfall vorhanden sein, die im Falle einer Fehlerfall-Konfiguration verwendet werden, um eine vertrauenswürdige Reparaturfunktion zu erkennen und/oder die Kommunikation mit ihr abzusichern. Solche Sicherheitsparameter sind insbesondere Identifizierungsdaten (IP-Adresse eines Servers, der eine vertrauenswürdige Reparaturfunktion bereitstellt, ein DNS-Name eines solchen Servers oder eine E.164 Nummer eines solchen Servers) und kryptographisches Material (ein geheimer Schlüssel, ein privater Schlüssel, ein öffentlicher Schlüssel, ein oder mehrere Zertifikate). Als Sicherheitsmechanismen für die geschützte Kommunikation mit dem Computerprogramm, welches die Reparaturfunktion realisiert, können übliche Verfahren unter Verwendung von IPsec oder SSL/TLS eingesetzt werden.

Eine Funk-Kommunikationseinrichtung verwendet diese Sicherheitsparameter gemäß einer Ausgestaltung der Erfindung, um sicherzustellen, dass sie mit einer vertrauenswürdigen Reparaturfunktion kommuniziert und dass die Kommunikation nicht manipuliert wurde. Ferner wird auf diese Weise ermöglicht, dass die Reparaturfunktion die betroffene Funk-Kommunikationseinrichtung verlässlich identifizieren kann.

Darüber hinaus ist es gemäß einer anderen Ausgestaltung der Erfindung vorgesehen, dass die Fehlerfall-Konfigurationsinformation auch das Absetzen eines Notrufes (Emergency Call) ermöglicht. Auf diese Weise kann erreicht werden, dass unabhängig von der aktuellen Konfiguration in jedem Fall ein Notruf ermöglicht ist. Dieser Aspekt ist wesentlich, wenn durch eine Regulierung gefordert würde, dass bei einem rekonfigurierbaren Funk-Kommunikationsgerät unabhängig von seiner aktuellen Konfiguration immer ein Notruf möglich sein muss.

Durch die Erfindung wird zusammenfassend für den Fall, dass ein fataler Fehler in einer Konfiguration einer Funk-Kommunikationseinrichtung, insbesondere einer rekonfigurierbaren Funk-Schnittstelle, erkannt wird, es nicht wie bei den bisherigen Systemen erforderlich ist, die Funk-Kommunikation zu deaktivieren. Stattdessen wird erfindungsgemäß eine bestimmte, für einen solchen Fehlerfall vorgesehene Fehlerfall-Konfiguration und eine entsprechende Fehlerfall-Konfigurationsinformation aktiviert, die zumindest eine Kommunikation mit einer Reparaturfunktion ermöglicht. Auf diese Weise ist es möglich, eine funktionierende Konfigurationsinformation zu bestimmen und in der Funk-Kommunikationseinrichtung zu aktivieren, das heißt die rekonfigurierbare Funk-Schnittstelle entsprechend der funktionierenden Konfigurationsinformation neu zu konfigurieren.

Auf diese Weise ist es möglich, die Kontrolle über die Konfiguration der Funk-Kommunikationseinrichtung für den regulären Betrieb (Normalbetrieb) relativ offen zu gestalten, da in einem Fehlerfall, falls etwas schief geht, unter Verwendung der Fehlerfall-Konfigurationsinformation wieder eine stabile und funktionierende Funk-Kommunikationseinrichtung erreicht werden kann.

Unabhängig von der aktuellen Konfiguration der Funk-Kommunikationseinrichtung ist in jedem Fall außerdem das Absetzen eines Notrufes gemäß einer Ausgestaltung der Erfindung ermöglicht.

Diese Eigenschaft ist insbesondere dann von Bedeutung, wenn sie durch einen Standard oder durch Anforderungen einer Regulierungsbehörde gefordert werden.

Ein Ausführungsbeispiel der Erfindung ist in den Figuren dargestellt und wird im folgenden näher erläutert.

Es zeigen
- Figur 1: eine Skizze eines Funksystems gemäß einem Ausführungsbeispiel der Erfindung;
- Figur 2: eine Skizze einer Funk-Kommunikationseinrichtung gemäß dem Ausführungsbeispiel der Erfindung;
- Figur 3: ein Ablaufdiagramm, in dem die einzelnen Verfahrensschritte gemäß dem Ausführungsbeispiel der Erfindung dargestellt sind.

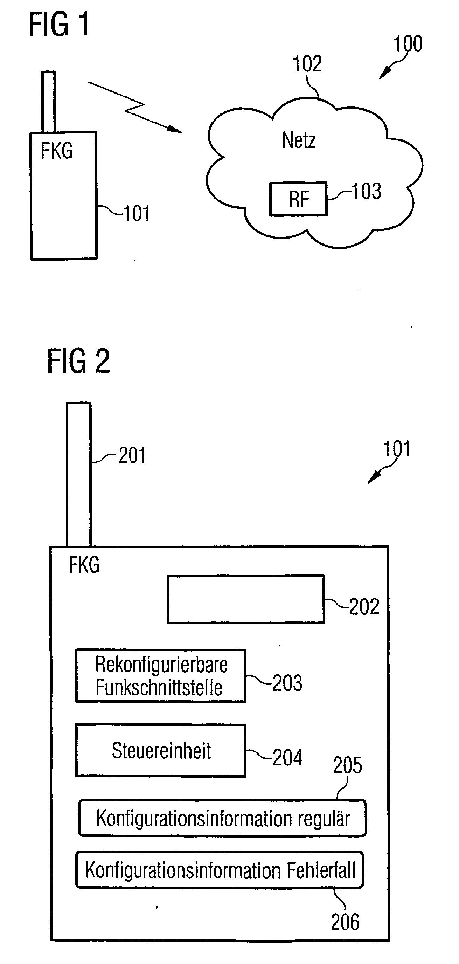

**Fig.1** zeigt ein Mobilfunksystem 100 mit einem Mobilfunk-Endgerät 101 als Mobilfunk-Kommunikationseinrichtung sowie einem Mobilfunk-Kommunikationsnetz 102, welches derart eingerichtet ist, dass eine Kommunikation gemäß dem GSM-Standard bereitgestellt wird.

Auch wenn in Fig.1 aus Gründen der einfacheren Darstellung nur ein Mobilfunkendgerät 101 gezeigt ist, sind in dem Mobilfunksystem 100 eine beliebige Anzahl von Mobilfunkendgeräten 101 vorgesehen.

In dem Mobilfunk-Kommunikationsnetz 102 ist ein Serverrechner 103 enthalten, in dem eine im folgenden näher beschriebene Reparaturfunktion gespeichert und bereitgestellt ist, um einen im folgenden näher beschriebenen, erkannten Fehler in dem Mobilfunkendgerät 101 zu behandeln.

**Fig.2** zeigt das Mobilfunkendgerät 101 im größeren Detail.

Das Mobilfunkendgerät 101 weist eine an dessen Gehäuse angebrachte Mobilfunkantenne 201 auf sowie eine Anzeigeeinheit 202 und eine Vielzahl von in einem Tastenfeld angeordneten Bedientasten (nicht dargestellt) zur Eingabe von Ziffern und/oder vorgegebenen Sonderzeichen sowie zum Starten (Aufbauen) und zum Beenden (Abbrechen) einer Kommunikationsverbindung.

Ferner weist das Mobilfunkendgerät 101 eine rekonfigurierbare Mobilfunkschnittstelle 203 sowie eine als Mikroprozessor ausgestaltete Steuereinheit 204 auf und einen ersten Speicher 205, in dem eine reguläre Konfigurationsinformation, im folgenden als Normalbetrieb-Konfigurationsinformation bezeichnet, gespeichert ist und einen zweiten Speicher 206 in dem eine Fehlerfall-Konfigurationsinformation gespeichert ist.

Die rekonfigurierbare Mobilfunk-Schnittstelle 203 weist die rekonfigurierbaren Funkeigenschaften des Mobilfunkendgeräts 101, gemäß diesem Ausführungsbeispiel
- die verwendete Betriebsfrequenz beziehungsweise die für die Kommunikation verwendeten Betriebsfrequenzen beziehungsweise das verwendete Frequenzband oder die verwendeten Frequenzbänder,
- die zur Kommunikation verwendete Sendeleistung,
- die im Rahmen der Kommunikation verwendeten Modulationsverfahren sowie
- die im Rahmen der Kommunikation verwendeten Kommunikationsprotokolle, auf.

Die Steuereinheit 204 konfiguriert in dem Normalbetrieb die rekonfigurierbare Mobilfunkschnittstelle 203 gemäß den jeweils in der Normalbetrieb-Konfigurationsinformation 205 angegebenen Funkeigenschaften beziehungsweise Funkparameter.

Wird ein Fehlerfall mittels einer Fehlerfall-Erkennungseinrichtung, die in dem Mobilfunkendgerät 101 oder in einem Rechner in dem Mobilfunk-Kommunikationsnetz 102 implementiert sein kann oder auch teilweise in dem Mobilfunkendgerät 101 und teilweise in dem Mobilfunk-Kommunikationsnetz 102, so aktiviert die Steuereinheit 204 auf eine entsprechende Signalisierung seitens der Fehlerfall-Erkennungseinrichtung hin, die Fehlerfall-Konfigurationsinformation, wie im folgenden noch näher erläutert wird.

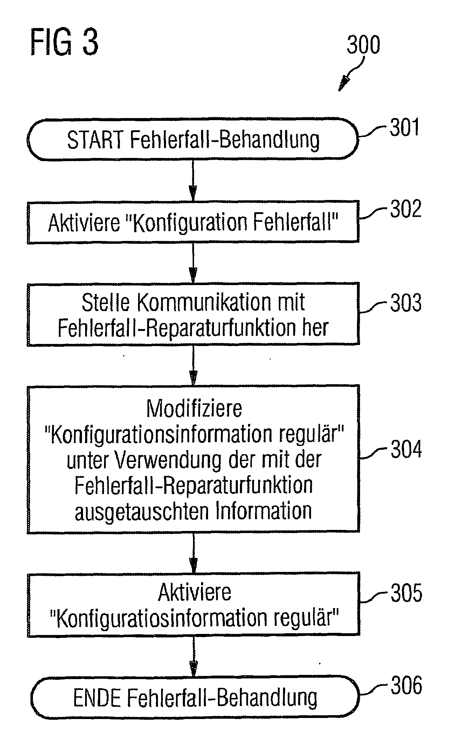

Empfängt die Steuereinheit 204 ein entsprechendes Fehlerfall-Signal von der Fehlerfall-Erkennungseinrichtung, so wird das in **Fig.3** in einem Ablaufdiagramm 300 dargestellte Verfahren durchgeführt.

Das in dem Ablaufdiagramm 300 dargestellte Verfahren beginnt mit einem Startschritt 301.

Die Fehlerbehandlung beginnt, nachdem ein Fehlerfall von in dem Mobilfunkendgerät 101 selbst erkannt wurde, oder von dem Mobilfunk-Kommunikationsnetz 102 dem Mobilfunkendgerät 101 signalisiert wurde, dass ein Fehlerfall vorliegt, oder auf anderem Wege die Fehlerfall-Behandlung getriggert wurde.

Die Fehlerfall-Behandlung startet mit der Aktivierung der Fehlerfall-Konfigurationsinformation.

Das bedeutet, dass die Konfiguration der rekonfigurierbaren Mobilfunkschnittstelle 203 nicht mehr durch die Normalbetrieb-Konfigurationsinformation 205 definiert ist, welche ja erkanntermaßen fehlerhaft ist, sondern durch die Fehlerfall-Konfigurationsinformation 206 (Schritt 302).

Unter Verwendung der Fehlerfall-Konfigurationsinformation wird von dem Mobilfunkendgerät 101 eine Kommunikationsverbindung mit der Fehlerfall-Reparaturfunktion, wie sie von dem Reparaturfunktions-Rechner 103 bereitgestellt wird, welcher sich in dem Mobilfunk-Kommunikationsnetz 102 befindet, aufgebaut (Schritt 303).

Ist die Kommunikationsverbindung zwischen dem Mobilfunkendgerät 101 und dem Reparaturfunktions-Rechner 103 aufgebaut, tauschen das Mobilfunk-Endgerät 101 und der Fehlerfrei-Reparatur-Rechner Informationen aus, die für die Behandlung des aufgetretenen und ermittelten Fehlers erforderlich sind.

Die Informationen enthalten insbesondere die Normalbetrieb-Konfigurationsinformation (insbesondere die zu verwendenden Software-Module, die jeweilige Version sowie andere vorgegebene Konfigurationsparameter), können aber ferner Information zur Identifizierung des Mobilfunkendgeräts 101 (Information über den Hersteller, den Typ des Mobilfunkendgeräts sowie dessen Seriennummer und dessen Nutzer enthalten (im Falle eines zellulären Mobilfunksystems wie GSM oder UMTS, dessen IMSI (International Mobile Subscriber Identity)).

Diese Informationen können direkt von dem Mobilfunkendgerät 101 zu dem Fehlerfall-Reparaturfunktions-Rechner 103 übermittelt werden. Es ist jedoch in einer alternativen Ausgestaltung ebenfalls möglich, dass sich in dem Mobilfunk-Kommunikationsnetz 102 ein Rechner (Knoten) befindet, der ebenfalls Informationen über die Normalbetrieb-Konfigurationsinformation enthält, welcher auch als Reconfiguration Manager bezeichnet wird.

In diesem Fall übermittelt das Mobilfunkendgerät 101 vorzugsweise Informationen, die es dem Fehlerfall-Reparaturfunktions-Rechner ermöglicht, auf diese Daten zuzugreifen. Ein Beispiel ist die Adresse des Reconfiguration Managers, der die Normalbetrieb-Konfigurationsinformation enthält sowie eine Identifizierungsinformation, beispielsweise die International Mobile Equipment Identifier (IMEI)-Information oder die IMSI für ein zelluläres Mobilfunk-Kommunikationsnetz oder eine IEEE MAC-Adresse oder die IP-Adresse oder die URL (**U**niform **R**esource **L**ocator) oder die URI (**U**niform **R**esource **I**dentifier) des Reconfiguration Managers sowie des betroffenen Mobilfunkendgeräts 101, mittels welcher Identifizierungsinformation der Fehlerfall-Reparaturfunktionsrechner 103 bei dem angegebenen Reconfiguration Manager die Normalbetriebkonfigurationsinformation abfragen kann.

Das Mobilfunkendgerät 101 modifiziert die Normalbetrieb-Konfigurationsinformation unter Verwendung der mit dem Fehlerfall Reparaturfunktionsrechner 103 ausgetauschten Information (Schritt 304).

Diese Information kann insbesondere Anweisungen von der Fehlerfall-Behandlungsfunktion aufweisen zum Setzen oder Ändern von Konfigurationsparametern gemäß der neu übermittelten oder den zusätzlich übermittelten Informationen zur Normalbetrieb Konfigurationsinformation, sowie zum Löschen, Aktualisieren oder Hinzufügen von Softwaremodulen sowie neuer oder aktualisierter Softwaremodule.

Nach Abschluss der Modifikation wird die nunmehr aktualisierte Normalbetrieb-Konfigurationsinformation (Schritt 304) aktiviert und das Mobilfunkendgerät 101 wird gemäß der nunmehr modifizierten Normalbetrieb-Konfigurationsinformation (Schritt 305) konfiguriert. Dies bedeutet, dass zu diesem Zeitpunkt die Fehlerfall-Konfigurationsinformation nicht mehr aktiviert ist.

Damit endet die Fehlerfall-Behandlung (Schritt 306) und das Mobilfunkendgerät 101 wird wieder in dessen Normalbetrieb unter Verwendung der aktualisierten bzw. veränderten Normalbetrieb-Konfigurationsinformation betrieben und kann eine übliche Kommunikationsverbindung aufbauen.

In diesem Dokument sind folgende Veröffentlichungen zitiert:
[1] K. Moessner, S. Gultchev, R. Tafazolli, Software Defined Radio Reconfiguration Management, International Symposium on Personal, Indoor and Mobile Radio Communication (PIMRC'01), Volume 1, San Diego, California, USA, Seiten 91 bis 95, 30. September bis 03. Oktober 2001
[2] WO 02/43422
[3] EP 1 170 967 A1
[4] WO 97/16938
]5] EP 1 164 810 A1
[6] US 2002/0083156
[7] TRUST Deliverable D4.3, Report on Assessment of Novel Solutions on System Aspects of Reconfigurable Terminals and Recommendations for Standardisations, Abschnitt 4.2.1, Initial mode switching architecture, Seiten 169 bis 176 und Abschnitt 6.2.1, Security in SDR terminals, Seiten 336 bis 343, Dezember 2001
[8] Java specification request JSR-118 Mobile Information Device Profile, version 2.0, Public Draft, 2002, erhältlich im Internet am 20. Juli 2003 unter der URL:
   http://www.jcp.org/jsr/detail/118.jsp
[9] 3GPP TS 23.057 V.5.0.0, Mobile Execution Environment (MExE) Functional Description, März 2002, erhältlich im Internet am 20. Juli 2003 unter der URL:
   http://www.3gpp.org/ftp/specs/2002-06/Rel-5/23_series/23057-500.zip
[10] 3GPP TS 33.102 V5.0.0, 3G Security Architecture, Juni 2002, erhältlich im Internet am 20. Juli 2003 unter der URL:
   http://www.3gpp.org/ftp/specs/2002-06/Rel-5/33_series/33102-500.zip

## Patentansprüche

1. Funksystem mit mindestens einer Funk-Kommunikationseinrichtung, welche aufweist:
- eine rekonfigurierbare Funk-Schnittstelle,
- einen ersten Speicher, in dem eine Normalbetrieb-Konfigurationsinformation gespeichert ist,
- einen zweiten Speicher, in dem eine Fehlerfall-Konfigurationsinformation gespeichert ist,
- eine Steuereinheit zum Konfigurieren der rekonfigurierbaren Funk-Schnittstelle,
- eine Fehlerfall-Erkennungseinrichtung, die eingerichtet ist zum Erkennen eines Fehler der rekonfigurierbaren Funk-Schnittstelle,
wobei
- eine Fehlerfall-Behandlungseinrichtung vorgesehen ist, die eingerichtet ist, unter Verwendung der Fehlerfall-Konfigurationsinformation eine Fehlerbehandlung bereitzustellen derart, dass die rekonfigurierbare Funk-Schnittstelle rekonfiguriert wird,
**dadurch gekennzeichnet, dass**
- die Fehlerfall-Konfigurationsinformation verwendet wird, um eine Kommunikation zwischen der Funk-Kommunikationseinrichtung und der Fehlerfall-Behandlungseinrichtung zu ermöglichen.

2. Funksystem gemäß Anspruch 1,
eingerichtet als Mobilfunksystem.

3. Funksystem gemäß Anspruch 1 oder 2,
bei dem die Fehlerfall-Behandlungseinrichtung in einem separaten elektronischen Chip integriert ist.

4. Funksystem gemäß einem der Ansprüche 1 bis 3,
bei dem die Funk-Kommunikationseinrichtung eine Notrufeinrichtung aufweist, welche derart eingerichtet ist, dass ein Aufbau einer Notruf-Kommunikationsverbindung auch bei einer fehlerhaften Funk-Kommunikationseinrichtung bereitgestellt wird.

5. Funksystem gemäß einem der Ansprüche 1 bis 4,
wobei in der Normalbetrieb-Konfigurationsinformation und/oder in der Fehlerfall-Konfigurationsinformation Funkeigenschaften der rekonfigurierbaren Funkschnittstelle vorgegeben sind.

6. Funksystem gemäß Anspruch 5,
wobei in der Normalbetriebkonfigurationsinformation und/oder in der Fehlerfall-Konfigurationsinformation zumindest ein Teil der folgenden Funkeigenschaften der rekonfigurierbaren Funk-Schnittstelle enthalten sind:
- eine Sendeleistung der Funk-Kommunikationseinrichtung,
- ein im Rahmen der Funk-Kommunikation zu verwendendes Modulationsverfahren,
- eine oder mehrere im Rahmen der Funk-Kommunikation zu verwendende Frequenzen,
- eine oder mehrere im Rahmen der Funk-Kommunikation zu verwendende Frequenzbänder und/oder
- ein im Rahmen der Funk-Kommunikation zu verwendendes Kommunikationsprotokoll.

7. Funk-Kommunikationseinrichtung
- mit einer rekonfigurierbaren Funk-Schnittstelle,
- mit einem ersten Speicher, in dem eine Normalbetrieb-Konstellationsinformation gespeichert ist,
- mit einem zweiten Speicher, in dem eine Fehlerfall-Konfigurationsinformation gespeichert ist,
- mit einer Steuereinheit zum Konfigurieren der rekonfigurierbaren Funk-Schnittstelle,
**dadurch gekennzeichnet, dass**
- die Steuereinheit zum Konfigurieren der rekonfigurierbaren Funk-Schnittstelle derart eingerichtet ist, dass bei Auftreten eines Fehlerfalls unter Verwendung der Fehlerfall-Konfigurationsinformation eine Kommunikationsverbindung zu einem eine Fehlerbehandlung bereitstellenden Rechner aufgebaut wird.

8. Funk-Kommunikationseinrichtung gemäß Anspruch 7, eingerichtet als Mobilfunk-Kommunikationseinrichtung.

9. Funk-Kommunikationseinrichtung gemäß Anspruch 7 oder 8, eingerichtet als Mobilfunktelefon.

10. Funk-Kommunikationseinrichtung gemäß Anspruch 7 oder 8, eingerichtet als Mobilfunkmodul.

11. Funk-Kommunikationseinrichtung gemäß einem der Ansprüche 7 bis 10,
mit einer Notruf-Einrichtung, welche derart eingerichtet ist, dass ein Aufbau einer Notruf-Kommunikationsverbindung auch dann fehlerfrei bereitgestellt wird, wenn ein Fehlerfall auftritt.

12. Funk-Kommunikationseinrichtung gemäß einem der Ansprüche 7 bis 11,
wobei in der Normalbetrieb-Konfigurationsinformation und/oder in der Fehlerfall-Konfigurationsinformation Funkeigenschaften der rekonfigurierbaren Funkschnittstelle gegeben sind.

13. Funk-Kommunikationseinrichtung gemäß Anspruch 12,
wobei in der Normalbetrieb Konfigurationsinformation und/oder in der Fehlerfall-Konfigurationsinformation zumindest ein Teil der folgenden Funkeigenschaften der rekonfigurierbaren Funk-Schnittstelle enthalten sind:
- eine Sendeleistung der Funk-Kommunikationseinrichtung,
- ein im Rahmen der Funk-Kommunikation zu verwendendes Modulationsverfahren,
- ein oder mehrere im Rahmen der Funk-Kommunikation zu verwendende Frequenzen,
- eine oder mehrere im Rahmen der Funk-Kommunikation zu verwendende Frequenzbänder und/oder
- ein im Rahmen der Funk-Kommunikation zu verwendendes Kommunikationsprotokoll.

14. Verfahren zum Verändern einer rekonfigurierbaren Funk-Schnittstelle einer Funk-Kommunikationseinrichtung,
- bei dem ein Fehler der rekonfigurierbaren Funk-Schnittstelle der Funk-Kommunikationseinrichtung erkannt wird,
- bei dem unter Verwendung einer in der Funk-Kommunikationseinrichtung zusätzlich zu einer Normalbetrieb-Konfigurationsinformation gespeicherten Fehlerfall-Konfigurationsinformation eine Funk-Schnittstelle der Funk-Kommunikationseinrichtung gemäß der Fehlerfall-Konfigurationsinformation konfiguriert wird,
**dadurch gekennzeichnet, dass**
- über die konfigurierte Funk-Schnittstelle eine Verbindung zu einer Fehlerfall-Behandlungseinrichtung aufgebaut wird, von der Informationen für eine Fehlerbehandlung bereitgestellt werden.

## Claims

1. Radio system with at least one radiocommunication device, which has:
- a reconfigurable radio interface
- a first store, in which is stored the normal operation configuration data
- a second store in which is stored configuration data for a fault situation
- a control unit for configuring the reconfigurable radio interface
- a fault situation detection device which is set up to detect a fault in the reconfigurable radio interface,
wherein
- a fault situation handling device is provided, this being set up to provide fault handling, using the fault situation configuration data, such that the reconfigurable radio interface is reconfigured,
**characterised in that**
- the fault situation configuration data is used to enable communication between the radiocommunication device and the fault situation handling device.

2. Radio system in accordance with claim 1,
set up as a mobile radio system.

3. Radio system in accordance with one of the claims 1 or 2,
in which the fault handling device is integrated into a separate electronic chip.

4. Radio system in accordance with one of the claims 1 to 3,
in which the radiocommunication device has an emergency call device which is set up in such a way that the establishment of an emergency call communication link is provided for even on a faulty radiocommunication device.

5. Radio system in accordance with one of the claims 1 to 4,
wherein radio characteristics are prescribed for the reconfigurable radio interface in the normal operation configuration data and/or in the fault situation configuration data.

6. Radio system in accordance with claim 5,
wherein the normal operation configuration data and/or the fault situation configuration data contain at least some of the following radio characteristics of the reconfigurable radio interface:
- a transmission power for the radiocommunication device,
- a modulation method to be used in the context of the radiocommunications,
- one or more frequencies to be used in the context of the radiocommunications,
- one or more frequency bands to be used in the context of the radiocommunications and/or
- a communication protocol to be used in the context of the radiocommunications.

7. Radiocommunication device
- with a reconfigurable radio interface,
- with a first store in which is stored normal operation constellation data,
- with a second store in which is stored fault situation configuration data,
- with a control unit for configuring the reconfigurable radio interface,
**characterised in that**
- the control unit for configuring the reconfigurable radio interface is set up in such a way that, if a fault situation occurs, a communication link is set up, using the fault situation configuration data, to a computer which provides fault handling.

8. Radiocommunication device in accordance with claim 7,
set up as a mobile radiocommunication device.

9. Radiocommunication device in accordance with claim 7 or 8, set up as a mobile radio telephone.

10. Radiocommunication device in accordance with claim 7 or 8, set up as a mobile radiocommunication module.

11. Radiocommunication device in accordance with one of the claims 7 to 10,
with an emergency call device which is set up in such a way that it makes fault-free provision for the setting up of an emergency call communication link even when a fault situation occurs.

12. Radiocommunication device in accordance with one of the claims 7 to 11,
wherein radio characteristics for the reconfigurable radio interface are given in the normal operation configuration data and/or in the fault situation configuration data.

13. Radiocommunication device in accordance with claim 12,
wherein the normal operation configuration data and/or the fault situation configuration data contain at least some of the following radio characteristics of the reconfigurable radio interface:
- a transmission power for the radiocommunication device,
- a modulation method to be used in the context of the radiocommunications,
- one or more frequencies to be used in the context of the radiocommunications,
- one or more frequency bands to be used in the context of the radiocommunications and/or
- a communication protocol to be used in the context of the radiocommunications.

14. Method for modifying a reconfigurable radio interface of a radiocommunication device,
- in which a fault in the reconfigurable radio interface of the radiocommunication device is detected,
- in which, using fault situation configuration data, stored in the radiocommunication device additionally to the normal operation configuration data, a radio interface in the radiocommunication device is configured in accordance with the fault situation configuration data,
**characterized in that**
- a connection is set up via the configured radio interface to a fault situation handling device, from which data is provided for handling the fault.

## Revendications

1. Système radio, comprenant au moins un dispositif de radiocommunication qui présente :
- une interface radio reconfigurable,
- une première mémoire dans laquelle est mémorisée une information de configuration du fonctionnement normal,
- une seconde mémoire dans laquelle est mémorisée une information de configuration du cas de défaillance,
- une unité de commande pour configurer l'interface radio reconfigurable,
- un dispositif de reconnaissance du cas de défaillance qui est conçu pour reconnaître une défaillance de l'interface radio reconfigurable,
dans lequel
- un dispositif de traitement du cas de défaillance est prévu, lequel est conçu pour mettre à disposition un traitement de la défaillance utilisant l'information de configuration du cas de défaillance de telle sorte que l'interface radio reconfigurable est reconfigurée,
**caractérisé en ce que**
- l'information de configuration du cas de défaillance est utilisée pour permettre une communication entre le dispositif de radiocommunication et le dispositif de traitement du cas de défaillance.

2. Système radio selon la revendication 1,
conçu comme système de téléphonie mobile.

3. Système radio selon l'une ou l'autre des revendications 1 et 2, dans lequel le dispositif de traitement du cas de défaillance est intégré dans une puce électronique séparée.

4. Système radio selon l'une des revendications 1 à 3, dans lequel le dispositif de radiocommunication présente un dispositif d'appel d'urgence qui est conçu de telle sorte qu'un établissement d'une liaison de communication d'appel d'urgence est mis à disposition, même en cas d'un dispositif de radiocommunication défaillant.

5. Système radio selon l'une des revendications 1 à 4, dans lequel des propriétés radio de l'interface radio reconfigurable sont prescrites dans l'information de configuration du fonctionnement normal et/ou dans l'information de configuration du cas de défaillance.

6. Système radio selon la revendication 5,
dans lequel au moins une partie des propriétés radio suivantes de l'interface radio reconfigurable sont contenues dans l'information de configuration du fonctionnement normal et/ou dans l'information de configuration du cas de défaillance :
- une puissance d'émission du dispositif de radiocommunication,
- un procédé de modulation à utiliser dans le cadre de la radiocommunication,
- une ou plusieurs fréquences à utiliser dans le cadre de la radiocommunication,
- une ou plusieurs bandes de fréquence à utiliser dans le cadre de la radiocommunication et/ou
- un protocole de communication à utiliser dans le cadre de la radiocommunication.

7. Dispositif de radiocommunication,
- comprenant une interface radio reconfigurable,
- comprenant une première mémoire dans laquelle est mémorisée une information de constellation du fonctionnement normal,
- comprenant une première mémoire dans laquelle est mémorisée une information de configuration du cas de défaillance,
- comprenant une unité de commande pour configurer l'interface radio reconfigurable,
**caractérisé en ce que**
- l'unité de commande pour configurer l'interface radio reconfigurable est conçue de telle sorte que, lorsqu'un cas de défaillance survient, une liaison de communication est établie, grâce à l'utilisation de l'information de configuration du cas de défaillance, vers un ordinateur qui met un traitement de la défaillance à disposition.

8. Dispositif de radiocommunication selon la revendication 7, conçu comme dispositif de communication de téléphonie mobile.

9. Dispositif de radiocommunication selon l'une ou l'autre des revendications 7 et 8, conçu comme téléphone pour la téléphonie mobile.

10. Dispositif de radiocommunication selon l'une ou l'autre des revendications 7 et 8, conçu comme module pour la téléphonie mobile.

11. Dispositif de radiocommunication selon l'une des revendications 7 à 10,
comprenant un dispositif d'appel d'urgence qui est conçu de telle sorte qu'un établissement d'une liaison de communication d'appel d'urgence est mis à disposition sans défaillance même si un cas de défaillance se présente.

12. Dispositif de radiocommunication selon l'une des revendications 7 à 11,
dans lequel des propriétés radio de l'interface radio reconfigurable sont données dans l'information de configuration du fonctionnement normal et/ou dans l'information de configuration du cas de défaillance.

13. Dispositif de radiocommunication selon la revendication 12,
dans lequel au moins une partie des propriétés radio suivantes de l'interface radio reconfigurable sont contenues dans l'information de configuration du fonctionnement normal et/ou dans l'information de configuration du cas de défaillance :
- une puissance d'émission du dispositif de radiocommunication,
- un procédé de modulation à utiliser dans le cadre de la radiocommunication,
- une ou plusieurs fréquences à utiliser dans le cadre de la radiocommunication,
- une ou plusieurs bandes de fréquence à utiliser dans le cadre de la radiocommunication et/ou
- un protocole de communication à utiliser dans le cadre de la radiocommunication.

14. Procédé pour modifier une interface radio reconfigurable d'un dispositif de radiocommunication,
- dans lequel une défaillance de l'interface radio reconfigurable du dispositif de radiocommunication est reconnue,
- dans lequel une interface radio du dispositif de radiocommunication est configurée conformément à l'information de configuration du cas de défaillance, grâce à l'utilisation d'une information de configuration du cas de défaillance mémorisée dans le dispositif de radiocommunication en supplément à une information de configuration du fonctionnement normal,
**caractérisé en ce que**
- une liaison est établie vers un dispositif de traitement du cas de défaillance depuis lequel des informations sont mises à disposition pour un traitement de la défaillance, par l'intermédiaire de l'interface radio configurée.
